# EUROPÄISCHE PATENTSCHRIFT

(11) **EP 0 935 736 B1**
(45) Veröffentlichungstag und Bekanntmachung des Hinweises auf die Patenterteilung: **26.10.2005**
(21) Anmeldenummer: 97938788.3
(22) Anmeldetag: 19.08.1997
(51) Int. Cl.: G01B 11/24, A61C 19/04

(54) **VERFAHREN UND VORRICHTUNG ZUR DREIDIMENSIONALEN VERMESSUNG VON OBJEKTEN**
THREE-DIMENSIONAL OBJECT MEASUREMENT PROCESS AND DEVICE
PROCEDE ET DISPOSITIF DE MESURE TRIDIMENSIONNELLE D'OBJETS

(30) Priorität: 13.09.1996 DE 19638758
(43) Veröffentlichungstag der Anmeldung: 18.08.1999
(73) Patentinhaber: OraMetrix GmbH, 10179 Berlin (DE)
(72) Erfinder: RUBBERT, Rüdger, D-12101 Berlin (DE)
(74) Vertreter: Weber, Dieter
(86) Internationale Anmeldenummer: PCT/DE1997/001797
(87) Internationale Veröffentlichungsnummer: WO 1998/011403

(56) Entgegenhaltungen:
- CA-A- 2 163 934
- DE-A- 4 445 552
- US-A- 5 309 243
- US-A- 5 372 502

## Beschreibung

Die Erfindung betrifft ein Verfahren zur dreidimensionalen Vermessung von Objekten durch optische Aufnahmen, aufprojizierte Muster und Triangulationsberechnungen, bei dem die Einrichtungen für die Projektion des Musters und für die Bildaufnahme voneinander getrennt aufgebaut sind und für die Vermessung unabhängig voneinander positioniert werden können.

Ferner betrifft die Erfindung eine Vorrichtung für ein solches Verfahren.

Zum Zweck der Vermessung bietet der Einsatz von Verfahren, die auf optischer Grundlage arbeiten, eine Vielzahl von Vorteilen. Eine Vermessung kann schnell und berührungslos erfolgen. Zum Stand der Technik gehören elektronische Bildwandler, beispielsweise CCD-Arrays, deren Ausgangssignale unmittelbar nach einer Digitalisierung gespeichert oder ausgewertet werden können.

Bekannt sind Verfahren und Vorrichtungen zur Darstellung und optischen dreidimensionalen Vermessung von räumlichen Oberflächen. Sie basieren auf Triangulationsverfahren, bei denen unter einem bestimmten Winkel Punkt-, Linien- oder beliebige andere Muster auf die betrachtete Oberfläche projiziert werden und die projizierten Muster unter einem anderen Blickwinkel mit einer Optik und einem Bildwandler aufgenommen werden. Die bekannte Geometrie zwischen Projektionsrichtung und Aufnahmerichtung erlaubt die dreidimensionale Berechnung von Stützpunkten der Oberfläche.

Projiziert man auf ein Objekt mit räumlichen Erstreckungen beispielsweise ein gleichmäßiges Linienmuster, ergibt sich bei einer von der Projektionsrichtung verschiedenen Blickrichtung aufgrund der Oberflächengestalt des Objekts ein verzerrtes Linienmuster. Bildet man aus dieser Betrachtungsrichtung das Objekt durch eine geeignete Optik auf ein CCD-Array ab, digitalisiert man die Bildsignale und stellt sie einer Datenverarbeitungseinheit zur Verfügung, ist es möglich, an verschiedenen Stellen des Bildes die Linien zu identifizieren und bei Kenntnis des optischen Strahlengangs und unter Berücksichtigung der geometrischen Ausbildung des projizierten Linienmusters über Triangulation 3D-Koordinaten zu errechnen.

Es gehört zum Stand der Technik, bei der Aufnahme mehrerer Einzelbilder mit unterschiedlicher Aufnahmerichtung, die gewonnenen Teilinformationen über dreidimensionale Oberflächen anhand der 3D-Koordinaten übereinstimmender Oberflächensegmente mittels sogenannter "Matching-Algorithmen" zu einer Gesamtinformation zu kombinieren.

Die DE 44 45 552 A1 zeigt einen optisch abtastenden Verschiebungsdetektor mit einer Lichtprojektionseinrichtung zum Abstrahlen eines Lichtstrahls auf ein Objekt und einer Lichtempfangseinrichtung zum Empfangen eines vom Objekt reflektierten Lichtstrahls zum Ausgeben eines Objektpositionssignals, mit einem die Projektionseinrichtung und die Empfangseinrichtung tragenden Schlitten, einer Positionserfassungseinrichtung zum Ermitteln des Abstands zwischen der Projektionseinrichtung und dem Objekt abhängig von dem Positionssignal, wobei der Schlitten verstellbar an einem Rahmen gehalten wird und wobei eine Abtasteinrichtung vorhanden ist, um den Schlitten in Abrasterrichtung zu verstellen, um den Lichtstrahl über das Objekt zu rastern.

Demgegenüber beschreibt die Druckschrift US 5,372,502 einen optischen Mundprober zur dreidimensionalen Vermessung von Zähnen mit einer hochauflösenden zweidimensionalen Punkt für Punkt frei programmierbaren Projektionseinheit, die ein digitalisiertes Projektionsmuster von einem Computer in Übereinstimmung mit einer programmierten mathematischen oder graphischen Methode generiert, das Muster in einem Bildspeicher ablegt und es dann durch Adressieren einer LCD-Matrixplatte darstellt und mit Hilfe einer fokussierenden Optik auf die Oberfläche, die vermessen werden soll, abbildet.

Nun ist es beispielsweise für endoskopische Untersuchungen wünschenswert
a) getrennte Einheiten für die Projektion des Musters und für die Bildaufnahme zu verwenden und diese mit einer frei wählbaren Ausrichtung gegenüber der zu vermessenenden Oberfläche einzusetzen. Um für die Triangulationsberechnung relevante Daten zu erhalten darf hierbei ein minimaler Winkel zwischen der Ausrichtung der beiden Einheiten nicht unterschritten werden;
b) sofern eine Folge von Einzelbildern aufgenommen wird, während des Aufnahmevorgangs die Position und Ausrichtung der beiden Einheiten gegenüber dem Objekt, zur Vereinfachung der Handhabung, unabhängig voneinander zu verändern, beispielsweise um weitere Oberflächenbereiche durch zusätzlichen Bildaufnahmen vermessen zu können.

Aufgabe der Erfindung ist es daher, das Verfahren und die Vorrichtung zur dreidimensionalen Vermessung von Objekten der eingangs beschriebenen Art zu schaffen, bei dem die Position und Orientierung der Aufnahmeeinheit und der Projektionseinheit zueinander bestimmt werden kann und für den Fall, daß mehr als eine. Aufnahme zweckdienlich ist, die im Verlauf des Aufnahmevorgangs erfolgte unabhängige Bewegung der beiden Einheiten zueinander zuverfolgen. Für die Triangulationsberechnung muß dann der für das jeweilige Einzelbild ermittelte geometrische- Zusammenhang zwischen Bildaufnahme und Musterprojektion berücksichtigt werden.

Die Aufgabe wird erfindungsgemäß bei dem Verfahren dadurch gelöst, daß unter Verwendung
a) eines flächigen elektronischen Bildwandlers ein Aufnahmevorgang durchgeführt wird;
b) einer Strahlquelle und geeigneten optischen Mitteln ein Muster unter einem von der Aufnahmerichtung verschiedenen Winkel auf das zu vermessende Objekt projiziert wird;
c) einer geeigneten Einheit die Ausgangssignale des Bildwandlers digitalisiert werden und diese Daten einer Datenverarbeitungsanlage zur Verfügung gestellt werden;
d) einer Datenverarbeitungsanlage mittels geeigneter Schaltungen und/oder Algorithmen aus den Bilddaten der Einzelbilder über Triangulationsberechnungen 3D-Koordinaten von Punkten der Oberfläche des zu vermessenden Objekts bestimmt werden;
weitere Einrichtungen derart vorgesehen und/oder die zum Einsatz kommenden Verfahren und/oder Einrichtungen derart ausgebildet werden, daß die Position und Ausrichtung der Aufnahmeeinheit und der Projektionseinheit zueinander bestimmt werden kann. Ist die Position und Ausrichtung beider Einheiten für die Aufnahme eines Einzelbildes zueinander bekannt, können in der bekannten Art und Weise für eine Anzahl von Punkten der Oberfläche über Triangulationsberechnung 3D-Koordinaten ermittelt werden.

Es ist erfindungsgemäß vorteilhaft zu diesem Zweck zusätzliche Einrichtungen zu verwenden, um die Position und Ausrichtung der Aufnahmeeinheit und der Projektionseinheit zueinander zu messen.

Dies kann erfindungsgemäß vorteilhaft sowohl direkt als auch indirekt, sowohl tastend oder mit den Meßmitteln verbunden als auch berührungslos, beispielsweise auf optischem Weg erfolgen.

Sollen nun zusätzliche Informationen als zu den aus einer Einzelaufnahme akquirierten Informationen über das Objekt erfaßt werden, muß die Aufnahmeeinheit in der Lage sein eine Folge von Einzelbildern aufzunehmen. Für die erfindungsgemäße Aufgabe, daß die Projektionseinheit und die Aufnahmeeinheit im Verlauf des Aufnahmevorgangs unterschiedlich bewegt werden, müssen die Einrichtungen und/oder Verfahren erfindungsgemäß vorteilhaft derart ausgebildet sein, daß auch für die Folgebilder die geometrische Anordnung der Aufnahmeeinheit und der Projektionseinheit zueinander bestimmt werden kann.

Dies kann erfindungsgemäß vorteilhaft dadurch gewährleistet werden, daß die oben genannten Meßmittel auch zum Zeitpunkt der zusätzlich durchgeführten Aufnahmen ausgewertet und die Meßergebnisse in der beschriebenen Art und Weise in der Triangulationsberechnung berücksichtigt werden.

Für den Fall, daß in der Folge der Einzelbilder das Objekt derart aufgenommen wird, daß die aus dem Einzelbild ermittelten 3D-Koordinaten zu einem nennenswerten Anteil übereinstimmende Oberflächensegmente beschreiben, können - wie oben beschrieben - die jeweiligen 3D-Informationen durch zum Stand der Technik gehörende "Matching-Algoritmen" kombiniert werden.

Erfolgt die Aufnahme der Einzelbilder in schneller Folge, kann bei entsprechender Handhabung der Einheiten davon ausgegangen werden, daß - erstens - der Anteil übereinstimmender Oberflächensegmente ausreichend ist und - zweitens - die geometrische Zuordnung der Aufnahmeeinheit und der Projektionseinheit zueinander nur in Maßen gegenüber der vorherigen Aufnahme verändert wurde.

War also die Zuordnung beider Einheiten bei beispielsweise der ersten Aufnahme bekannt und konnte eine nennenswerte Anzahl von die Oberfläche beschreibenden 3D-Koordinaten berechnet werden, dann unterscheiden sich die in der nächsten Aufnahme enthaltenen Informationen in folgenden Komponenten:
a) die 3D-Koordinaten der übereinstimmenden Oberflächensegmente können linear in den drei Raumrichtungen versetzt abgebildet sein;
b) die 3D-Koordinaten der übereinstimmenden Oberflächensegmente können bezogen auf die drei Raumrichtungen rotativ versetzt abgebildet sein;
c) die relative Position der Aufnahmeeinheit und der Projektionseinheit zueinander kann linear in den drei Raumrichtungen zueinander verändert worden sein;
d) die relative Position der Aufnahmeeinheit und der Projektionseinheit zueinander kann bezogen auf die drei Raumrichtungen rotativ verändert worden sein;

Diese Veränderungsmöglichkeiten werden im folgenden zum Zwecke der Verallgemeinerung der Aussagen auch als "Freiheitsgrade" bezeichnet.

Zum Stand der Technik in dem Fachgebiet der grafischen Datenverarbeitung gehören Matching-Algorithmen, die aus unterschiedlichen Datensätzen von 3D-Koordinaten die Schnittmenge derjenigen Daten bilden, die übereinstimmenden Oberflächensegmenten zuzuordnen sind, und die die vorstehend gelisteten möglichen Veränderungen a) und b) variieren und derart optimieren, daß die Schnittmenge der jeweiligen 3D-Daten beider Datensätze unter Berücksichtigung der entsprechenden Verschiebungen und Drehungen optimal ineinander passen. Voraussetzung hierfür ist, daß die vorstehend gelisteten Veränderungen c) und d) bekannt sind.

Aus der numerischen Mathematik sind Algorithmen bekannt, die eine endliche Anzahl von Freiheitsgraden systematisch variieren und unter Berücksichtigung eines oder mehrerer Gütekriterien optimieren. Bei einer systematischen Variation potenziert sich jedoch der Rechenaufwand mit jedem zusätzlichen Freiheitsgrad.

Aus der Bionik sind im Zusammenhang mit dem Stichwort "Evolutionsstrategien" rekursiv gestufte Verfahren bekannt, die durch stochastische Variation der Freiheitsgrade und stufenweiser Auswahl der jeweils besten Variante unter der Voraussetzung, daß die auszuwertenden Informationsmengen im wesentlichen ähnlich sind, erstaunlich schnell einer optimalen Lösung zustreben.

Es ist in diesem Sinne erfindungsgemäß vorteilhaft zur Lösung der erfindungsgemäßen Aufgabe erweiterte Matching-Algorithmen derart zu verwenden, daß
- erstens - in einem rekursiven numerischen Prozeß zunächst mehrfach sogenannte "Nachkommen"-Varianten durch stochastische Variation der vorstehend genannten Freiheitsgrade c) und d) gebildet werden,
- zweitens - für jede Nachkommen-Variante der 3D-Datensatz unter Berücksichtigung der getroffenen Annahmen für die Freiheitsgrade c) und d) aus den Bildinformationen durch Triangulation in bekannter Weise berechnet werden,
- drittens - für jede Nachkommen-Variante in einer Matching-Berechnung in bekannter Art und Weise aus den unterschiedlichen Datensätzen von 3D-Koordinaten die Schnittmenge derjenigen Daten gebildet werden, die übereinstimmenden Oberflächensegmenten zuzuordnen sind, und die vorstehend gelisteten Freiheitsgrade a) und b) derart variiert und optimiert werden, daß die gebildete Schnittmenge der jeweiligen 3D-Daten beider Datensätze sich optimal unter Berücksichtigung der jeweils gewählten geometrischen Veränderung bezüglich der Freiheitsgerade a) und b) ineinander transformieren läßt,
- viertens - aus den Nachkommen-Varianten im Sinne einer Evolution diejenige ausgewählt wird, die die maximal erreichte Güte hinsichtlich der Übereinstimmung der dasselbe Oberflächensegment beschreibenden Daten aus beiden Datensätzen aufweist,
- fünftens - entsprechend der beschriebenen Evolutionsstrategie ausgehend von den getroffenen Annahmen für die Freiheitsgrade c) und d) der zuvor ausgewählten besten Nachkommen-Variante mit reduzierten Grenzen die Freiheitsgrade c) und d) wieder in verschiedenen Varianten neue Nachkommen der nächsten Generation erneut stochastisch variiert werden und entsprechend den o. g. fünf Punkten - erstens bis fünftens - solange rekursiv verfahren wird, bis die Variationsgrenzen der Freiheitsgrade c) und d) und die Unterschiede zwischen den Generationen bzgl. der in jedem Durchlauf erreichten maximalen Güte hinreichend klein werden.

Im Ergebnis sind alle benötigten Informationen mit ausreichender Genauigkeit bekannt.

Es ist erfindungsgemäß vorteilhaft, die Einrichtungen für die Projektion des Musters und für die Bildaufnahme derart auszubilden, daß diese während der Aufnahme des ersten Einzelbildes starr und in eindeutiger Position und Orientierung miteinander verbunden sind. Im weiteren Verlauf der Aufnahme wird die Verbindung gelöst und damit eine voneinander unabhängige Bewegung ermöglicht. Die zusätzlichen dreidimensionalen Vermessungswerte des Objekts können dann für jede neue Bildaufnahme mit dem vorstehend beschriebenen erweiterten Matching-Algorithmus berechnet werden und wie oben beschrieben zu einer Gesamtinformation kombiniert werden.

Es ist alternativ erfindungsgemäß vorteilhaft, die geometrische Anordnung der Projektionseinheit und der Aufnahmeeinheit zueinander dadurch zu messen, daß das verwendete Muster sowohl auf das Objekt als auch auf die Bildaufnahmeeinheit projiziert wird und das sich auf einer definierten starr mit der Bildaufnahmeeinheit verbundenen Oberfläche ergebende Muster durch einen Bereich des Bildwandlers aufgenommen wird. In diesem Sinne kann der Bildwandler mit einem Teil seines flächigen Sichtfelds das Objekt und mit dem anderen Teil das auf die Bildaufnahmeeinheit selbst projizierte Muster aufnehmen.

Bei der Auswertung der Bildinformation wird dann erfindungsgemäß vorteilhaft zunächst aus der Verzerrung des auf die beispielsweise ebene und als Mattscheibe ausgebildete Oberfläche der Bildaufnahmeeinheit projizierten Musters die geometrische Anordung der beiden Einheiten zueinander über Triangulation errechnet und im weiteren unter Berücksichtigung der Zuordnung der beiden Einheiten zueinander in oben beschriebener Art und Weise das Objekt räumlich vermessen.

Aus der deutschen Patentanmeldung "Verfahren zur Erhöhung der Signifikanz der dreidimensionalen Vermessung von Objekten" vom 12. 9. 1996 desselben Anmelders ist ein Verfahren bekannt, bei dem kodierte Muster auf das Objekt zur Vermeidung von Mannigfaltigkeiten bei Triangulationsberechnungen projiziert werden.

Es ist erfindunggemäß besonders vorteilhaft derart kodierte Muster für die Bestimmung der Zuordnung der Projektionseinheit und der Aufnahmeeinheit zueinander zu verwenden.

Aus der deutschen Patentanmeldung 196 36 354.3 desselben Anmelders ist ein Verfahren und eine Vorrichtung bekannt, bei dem durch synchron zur Bildwechselfrequenz des Bildwandlers gestellte optische Mittel Strahlengänge abwechselnd wirksam oder unwirksam geschaltet werden können.

Es ist erfindungsgemäß besonders vorteilhaft, die Blickrichtung der Aufnahmeeinheit in diesem Sinne beispielsweise durch zwei flächig wirksame LCD-Einheiten - die beispielsweise an zwei optischen Achsen eines Strahlteilers angeordnet werden - synchron zur Bildwechselfrequenz des Bildwandlers abwechselnd optisch durchlässig und undurchlässig zu schalten. Dies hat den Vorteil, daß zum Zwecke der Bestimmung der geometrischen Zuordnung der Projektions- zur Aufnahmeeinheit das Sichtfeld des Bildwandlers und damit die Auflösung bei der Abbildung des Objekts nicht reduziert werden muß.

Es ist erfindungsgemäß vorteilhaft zusätzlich weitere optische Mittel zur Projektion eines beispielsweise unterschiedlichen Musters auf die Bildaufnahmeeinheit auf der Projektionseinheit anzuordnen.

Es kann alternativ zu der oben beschriebenen starr mit der Aufnahmeeinheit gekoppelten Oberfläche erfindungsgemäß vorteilhaft das Muster auf eine getrennt angeordnete Oberfläche mit bekannter räumlicher Erstreckung zum Zwecke der Bestimmung der Zuordnung der Aufnahme- und Projektionseinheit zueinander projiziert und auf dem Bildwandler der Aufnahmeeinheit abgebildet werden.

Es kann erfindungsgemäß vorteilhaft eine zweite Aufnahmeeinheit zum Zwecke der Bestimmung der Zuordnung der Aufnahme- und Projektionseinheit zueinander angeordnet werden.

Sämtliche in dieser Erfindung beschriebenen Ausgestaltungen des Verfahrens und der Vorrichtung können erfindungsgemäß besonders vorteilhaft in vielfältiger Art und Weise miteinander kombiniert werden.

Die Vorrichtung zur dreidimensionalen Vermessung von Objekten der eingangs beschriebenen Art löst die Aufgabe gemäß der Erfindung durch die Merkmale, daß
a) mindestens ein flächiger elektronischer Bildwandler unter Verwendung einer zur Aufnahme von Bildern geeigneten Optik verwendet wird;
b) mindestens eine Einrichtung verwendet wird, die die Digitalisierung der Ausgangssignale des mindestens einen Bildwandlers bewirkt und diese Daten einer Datenverarbeitungsanlage zur Verfügung stellt;
c) mindestens eine Einrichtung verwendet wird, die die Projektion eines Musters erlaubt;
d) die Einrichtungen zur Projektion des Musters und zur Bildaufnahme unabhängig voneinander aufgebaut sind;
e) mindestens eine Datenverarbeitungsanlage unter Verwendung geeigneter Schaltungen und/oder Algorithmen sich für die Berechnung von 3D-Koordinaten nach dem Triangulationsverfahren eignet und
f) sich mindestens eine Einrichtung für die Bestimmung der geometrischen Zuordnung zwischen der Projektionseinheit und der Aufnahmeeinheit eignet.

Bei einer erfindungsgemäß besonders vorteilhaften Ausbildung der Vorrichtung eignet sich die Bildaufnahmeeinheit für die Aufnahme von mindestens zwei aufeinanderfolgenden Bildern.

Eine erfindungsgemäß besonders vorteilhafte Ausbildung der Vorrichtung sieht Einrichtungen vor, die die Daten von mindestens zwei Einzelbildern speichern können.

Eine erfindungsgemäß besonders vorteilhafte Ausbildung der Vorrichtung sieht Einrichtungen vor, die die Daten von mindestens zwei Einzelbildern verarbeiten und in der Lage sind, diese mittels geeigneter Schaltungen und/oder Algorithmen zu kombinieren.

Weitere Vorteile, Merkmale und Anwendungsmöglichkeiten der vorliegenden Erfindung ergeben sich aus der folgenden Beschreibung bevorzugter Ausführungsbeispiele in Verbindung mit den anliegenden Zeichnungen Fig. 1, 2, 3 und 4. Es zeigen:
- Fig. 1: schematisch eine Ausführungsform der Aufnahmeeinrichtung mit voneinander getrennter Projektions- und Aufnahmeeinheit, welche hier zum Zwecke der Aufnahme eines ersten Bildes unter definierten geometrischen Bedingungen bzgl. Projektions- und Aufnahmerichtung mit Hilfe von Positionierstiften zusammengekoppelt sind.
- Fig. 2: die gleiche Vorrichtung wie Fig. 1, jedoch entkoppelt zur Durchführung weiterer Aufnahmen.
- Fig. 3: schematisch eine weitere Ausführungsform der Aufnahmeeinrichtung mit voneinander getrennter Projektions- und Aufnahmeeinheit, gekennzeichnet durch die zusätzliche Projektion desselben Musters über einen zweiten Strahlengang der Projektionseinheit direkt auf eine Mattscheibe der Aufnahmeeinheit, dies zum Zwecke der ständigen Berechnung ihrer geometrischen Situation zueinander.
- Fig. 4: beispielhaft eine Ausführungsform eines kodierten Musters.

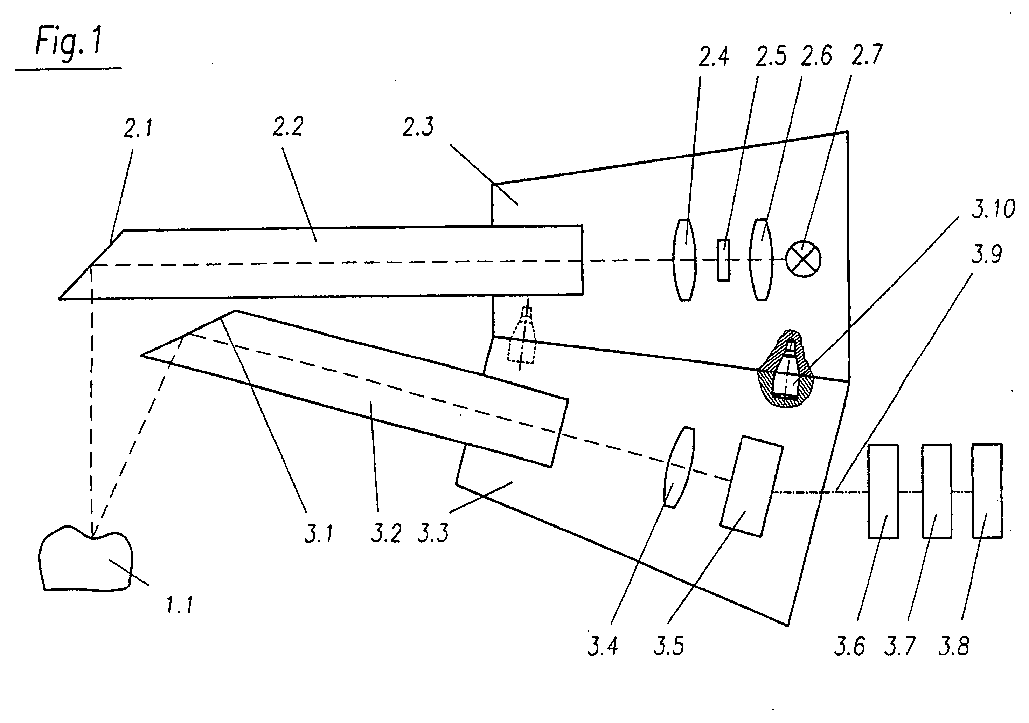

Die Projektions- und Aufnahmeeinheiten in den Ausführungsformen gemäß Fig. 1, 2 und 3 sind zur Vereinfachung der Beschreibung ohne bekannte, selbstverständliche Vorrichtungsteile nur schematisch wiedergegeben. Zur Vereinfachung der Beschreibung wurde zudem darauf verzichtet, Ausführungsformen von Vorrichtungsteilen, die zum Stand der Technik gehören, wie bestimmte Ausführungsformen von Verbindungen oder der Fixierung von Teilen, im Detail zu beschreiben.

In der Ausführungsform der Fig. 1 sind mit dem Grundgestell (2.3) der Projektionseinheit starr verbunden: Die Strahlquelle (2.7), die optischen Mittel (2.4 und 2.6) und der Musterträger (2.5). In der hier gezeigten Ausführungsform handelt es sich bei den optischen Mitteln um eine Strahlquelle (2.7), mit welcher sich das Objekt flächig beleuchten läßt, einen Kondensor (2.6) sowie einen Musterträger, auf welchem sich das Muster (eingeätzt oder in Form eines Dias) befindet. Der Träger (2.2) ist aus hygienischen Gründen (zum Zwecke der Desinfektion) lösbar mit dem Grundgestell (2.3) verbunden. Die Verbindung des Trägers (2.2) mit dem Grundgestell (2.3) ist derart ausgebildet, daß nach einem Wechsel des Trägers (2.2) sich dessen vorgesehene geometrische Position exakt (ohne Justage) wieder ergibt. Das auf dem Musterträger (2.5) befindliche Muster wird vermittels einer Strahlumlenkung (2.1) auf das aufzunehmende Objekt (1.1) projiziert. Um für die 3D-Berechnung relevante Informationen zu bekommen, ist ein projiziertes Linienmuster quer zu der von dem Triangulationswinkel aufgespannten Ebene gestreift.

Mit dem Grundgestell (3.3) der Aufnahmeeinheit sind starr verbunden: Das optische Mittel (3.4), der elektronische Bildwandler (3.5) sowie die Positionierstifte (3.10). Der Träger (3.2) ist aus hygienischen Gründen (zum Zwecke der Desinfektion) lösbar mit dem Grundgestell (3.3) verbunden. Die Verbindung des Trägers (3.2) mit dem Grundgestell (3.3) ist derart ausgebildet, daß nach einem Wechsel des Trägers (3.2) sich dessen vorgesehene geometrische Position exakt (ohne Justage) wieder ergibt. Der elektronische Bildwandler (3.5) ist als CCD-Array ausgebildet und über die elektrischen Verbindungen (3.9) mit der Ansteuerheit (3.6), dem A/D-Wandler (3.7) und der Datenverarbeitungseinheit (3.8) verbunden. Die vom Objekt (1.1) reflektierten Strahlen werden vermittels des optischen Mittels (3.4), in diesem Fall eines Objektives auf dem Bildwandler (3.5) abgebildet.

Zur Durchführung der ersten Aufnahme werden Projektions- und Aufnahmeeinheit mithilfe zweier Positionierstifte (3.10) in eine definierte Position zueinander gebracht. Der somit bekannte Triangulationswinkel erlaubt die Berechnung der 3D-Koordinaten des aufgenommenen Bildes.

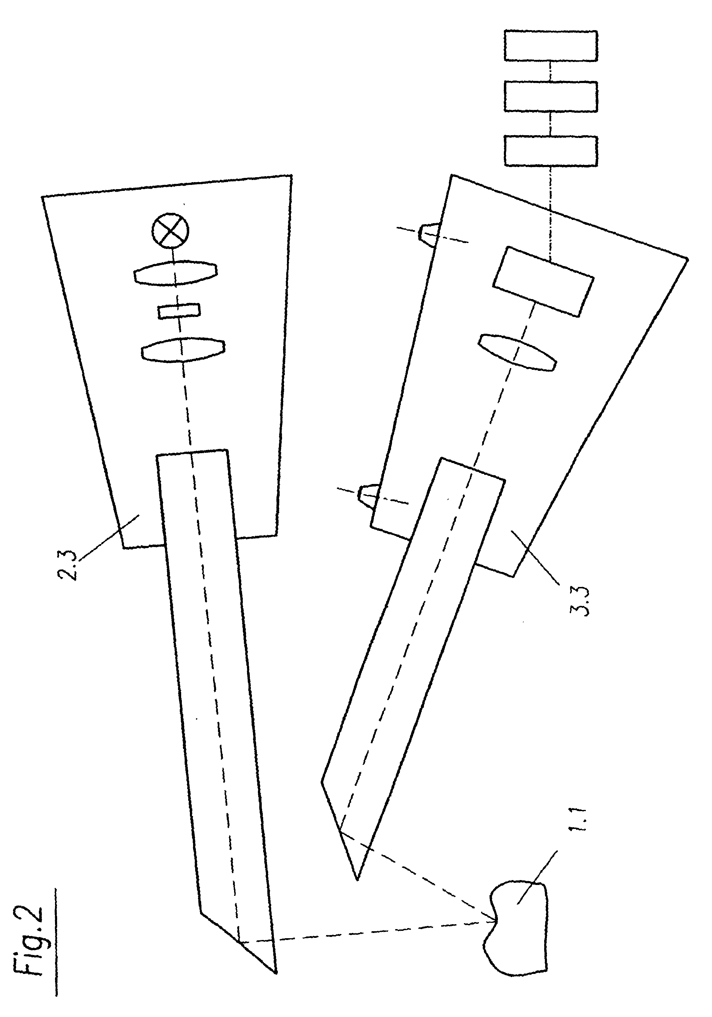

Die Fig. 2 zeigt die gleiche Projektions- und Aufnahmeeinheit, jedoch in entkoppeltem Zustand nach Durchführung der ersten Aufnahme einer Bildfolge von Aufnahmen desselben Objekts. Es können nun weitere Bilder von zusätzlichen Bereichen des Objekts und/oder aus veränderter Blickrichtung aufgenommen werden. Infolge der hohen Aufnahmefrequenz, beispielsweise in der gezeigten Ausgestaltung von 50 Hz, kann von einer hohen, in jedem Fall ausreichenden Überlappung der Bilder ausgegangen werden, welche es erlaubt, mittels geeigneter Matching-Algorithmen und numerischer Verfahren die sich gegenüber der jeweils vorhergehenden Aufnahme verändernde relative Position von Projektions- und Aufnahmeeinheit zueinander als auch zum Objekt und damit auch beispielsweise den jeweilig relevanten Triangulationswinkel zu berechnen. Dies ermöglicht die Erfassung von 3D-Koordinaten eines Objektes, welche mit einer Einzelaufnahme nicht hätten erfaßt werden können.

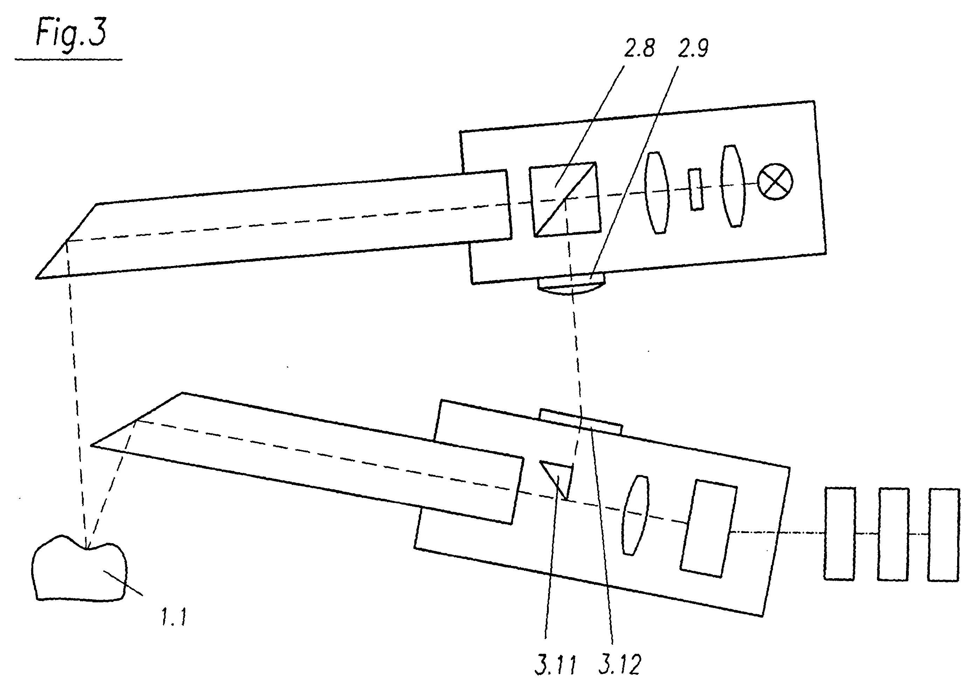

Die Fig. 3 zeigt eine Ausführungsform, bei welcher vermittels der Projektion desselben Musters über einen zweiten - außerhalb der (invasiv) in Anwendung kommenden Vorrichtungsteile - geführten Strahlengang von der Projektionseinheit zur Aufnahmeeinheit die relative Position von Projektions- und Aufnahmeeinheit zueinander zum Zeitpunkt jeder Aufnahme bekannt ist. Bei dieser Ausführungsform wird das Muster über einen Strahlteiler (2.8) um 90° Grad umgelenkt und durch eine an der Projektionseinheit befindliche Linse (2.9) mit divergentem Strahlengang auf eine auf der Aufnahmeeinheit angeordnete Mattscheibe (3.12) projiziert. Das sich hierdurch ergebende Abbild eines Teils des Musters wird über eine Strahlumlenkung (3.11) um 90° Grad derart in den Strahlengang des Trägers der Aufnahmeeinheit gelenkt, daß es auf einer Hälfte des flächigen Sichtfeldes des elektronischen Bildwandlers (3.5) abgebildet wird. Durch Auswertung der signifikaten Mustersegmente des Abbildes vermittels geeigneter numerischer Verfahren in der Datenverarbeitungseinheit (3.8) ist die relative Lage von Projektions- zu Aufnahmeeinheit für jede einzelne Aufnahme bekannt. Die erreichbare Genauigkeit der 3D-Koordinaten kann mit dieser Ausführungsform gegenüber der vorstehend beschrieben insbesondere bei komplexen Objekten, deren 3D-Koordinaten sich nur durch die Auswertung einer Vielzahl von Aufnahmen berechnen lassen signifikant gesteigert werden.

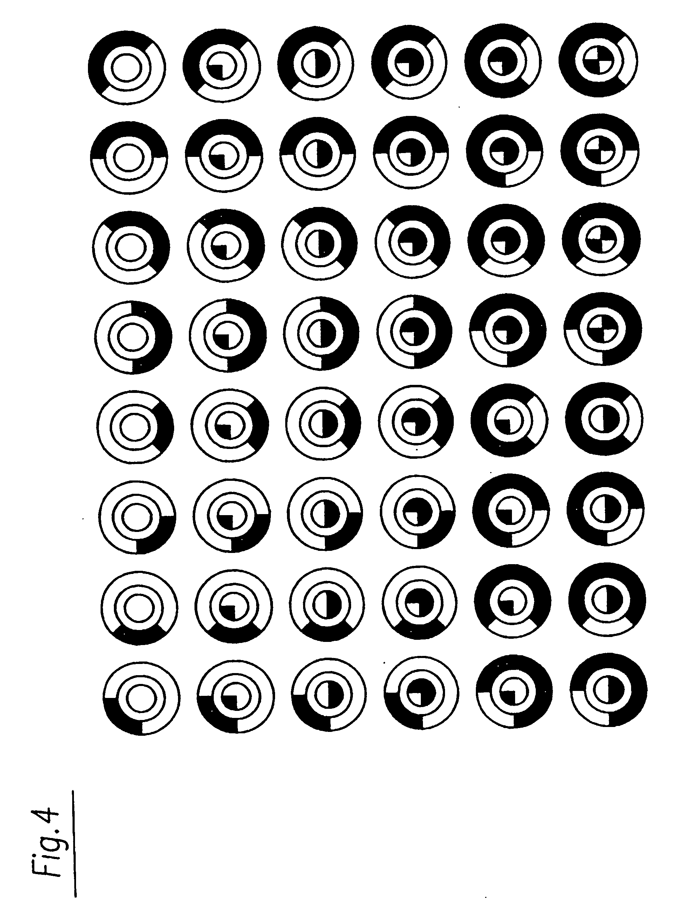

Die Fig. 4 zeigt beispielhaft eine Ausführungsform des Musters, durch welche aufgrund der unterschiedlichen Ausführung eines jeden einzelnen konzentrischen Elements (Kodierung) Mannigfaltigkeiten bei der Triangulationsberechnung vermieden werden können.

Eine besonders vorteilhafte Anwendung der Erfindung ist im invasiv-medizinischen Bereich zu sehen. Für die optische dreidimensionale Erfassung beispielsweise eines Organs im menschlichen Körpers führt man den vorderen Teil des Trägers (2.3) sowie des Trägers (3.2) beispielsweise durch die Bauchdecke ein, startet den Aufnahmevorgang durch ein in den Abbildungen nicht gezeigtes, im Rahmen der Datenverarbeitungseinheit (3.8) verfügbares Betätigungselement und bewegt im Verlauf des Aufnahmevorgangs die Projektions- und Aufnahmeeinheit derart, daß nach und nach alle relevanten Oberflächenbereiche des Objekts (1.1) sowohl auf dem Bildwandler (3.5) abgebildet als auch gleichermaßen von der Projektion des Linienmusters erfaßt werden. Man beendet den Aufnahmevorgang durch eine weitere Betätigung des vorstehend genannten Betätigungselements.

In der Folge der aufgenommenen Einzelbildinformationen befinden sich jetzt die Abbilder des aufgrund der Oberflächengestalt des Objekts (1.1) verzeichneten Linienmusters. Aus der Verzeichnung des Linienmusters lassen sich bei Kenntnis des optischen Strahlengangs und unter Berücksichtigung der geometrischen Ausbildung des projizierten Linienmusters für die entsprechenden Einzelaufnahmen für eine Vielzahl von Stützpunkten 3D-Koordinaten errechnen. Aus der Folge der den Einzelbildern zugeordneten 3D-Koordinaten lassen sich im weiteren die 3D-Koordinaten in der oben beschriebenen Art und Weise kombinieren, so daß im Ergebnis trotz der Begrenzungen der Projektionsfläche und des Sichtfelds der Aufnahmeeinheit die 3D-Koordinaten der gesamten untersuchten Oberfläche vorliegen. Hierbei sind Informationslücken aufgrund von Hinterschneidungen nicht mehr vorhanden. Durch eine online-Berechnung und -Anzeige der jeweiligen Zwischenergebnisse kann der Bediener zudem die Führung der Aufnahmevorrichtung von Hand optimieren.

Die hier gezeigten Ausführungsformen zeichnen sich u. a. dadurch aus, daß
a) in der Projektions- und Aufnahmeeinheit keine bewegten Teile Verwendung finden;
b) der optische Aufbau einfach ausgebildet ist;
d) sich außer für die Träger (2.2 und 3.2), die Grundgestelle (2.3 und 3.3) und den Musterträger zur Projektion des Musters (2.5) handelsübliche Hardware-Komponenten verwenden lassen;

Aus der deutschen Patentanmeldung 196 36 354.3 desselben Anmelders ist ein Verfahren und eine Vorrichtung bekannt, bei dem durch synchron zur Bildwechselfrequenz des Bildwandlers optische Mittel derart gestellt werden, daß abwechselnd ein Muster auf die zu vermessende Oberfläche projiziert und die betrachtete Oberfläche vollständig ausgeleuchtet wird.

Bei einer erfindungsgemäß besonders vorteilhaften Ausbildung der Aufnahmevorrichtung werden in dem vorstehenden Sinne zusätzliche Mittel derart angeordnet und gestellt, daß aus einer Folge von Einzelbildern sowohl 3D-Informationen als auch beispielsweise farbige Ansichten der erfaßten Oberfläche gewonnen werden können.

### Bezugszeichenliste

- 1.1: Objekt mit dreidimensionaler Erstreckung
- **2.**: **Projektionseinheit**
2.1 Strahlumlenkung (Spiegel)
2.2 Träger (hier ausgeführt als Körper aus optischem Glas)
2.3 Grundgestell
2.4 Optische Mittel (Objektiv)
2.5 Musterträger (mit eingeätztem Muster oder z. B. Dia)
2.6 Optische Mittel (Kondensor)
2.7 Strahlquelle
2.8 Strahlteiler
2.9 Optische Mittel (Linse)
- **3.**: **Aufnahmeeinheit**
3.1 Strahlumlenkung (Spiegel)
3.2 Träger (hier ausgeführt als Körper aus optischem Glas)
3.3 Grundgestell
3.4 Optische Mittel (Objektiv)
3.5 Elektronischer Bildwandler (CCD-Array)
3.6 Ansteuereinheit
3.7 A/D-Wandler (Frame-Grabber)
3.8 Datenverarbeitungseinheit
3.9 Elektrische Verbindungen
3.10 Positionierstifte
3.11 Strahlumlenkung (Umlenkprisma)
3.12 Mattscheibe

## Patentansprüche

1. Verfahren zur dreidimensionalen Vermessung von Objekten (1.1) durch optische Aufnahmen, aufprojizierte Muster und Triangulationsberechnungen, unter Verwendung mindestens eines elektronischen Bildwandlers (3.5) mit flächigem Sichtfeld, mindestens eines optischen Mittels (3.4) für die Abbildung des Objektes auf dem Bildwandler (3.5) und mindestens einer Strahlquelle (2.7) und geeigneter optischer Mittel (2.4, 2.5 und 2.6) für die Projektion von Mustern, **dadurch gekennzeichnet, daß**
a) die Mittel (2.1 bis 2.7) für die Projektion des Musters von den Mitteln (3.1 bis 3.5) für die Bildaufnahme räumlich getrennt, nicht mit ihnen verbunden und ihnen gegenüber in mindestens einem Freiheitsgrad beweglich sind.
b) für mindestens eine Bildaufnahme im Verlauf des Aufnahmevorgangs die geometrische Anordnung der Mittel (2.1 bis 2.7) für die Projektion des Musters gegenüber den Mitteln (3.1 bis 3.5) für die Bildaufnahme nicht von vornherein bekannt ist und unter Verwendung weiterer Mittel bestimmt werden muß.

2. Verfahren nach Anspruch 1, **dadurch gekennzeichnet, daß** es sich bei den weiteren Mitteln, die zur Bestimmung der geometrischen Anordnung der Mittel (2.1 bis 2.7) für die Projektion des Musters gegenüber den Mitteln (3.1 bis 3.5) für die Bildaufnahme verwendet werden, um Mittel zur Vermessung dieser geometrischen Anordnung handelt.

3. Verfahren nach Anspruch 2, **dadurch gekennzeichnet, daß** die Vermessung der geometrischen Anordnung der Mittel (2.1 bis 2.7) für die Projektion des Musters gegenüber den Mitteln (3.1 bis 3.5) für die Bildaufnahme auf optischem Wege erfolgt.

4. Verfahren nach Anspruch 3, **dadurch gekennzeichnet, daß** für die optische Vermessung der geometrischen Anordnung der Mittel (2.1 bis 2.7) für die Projektion des Musters gegenüber den Mitteln (3.1 bis 3.5) für die Bildaufnahme Triangulationsberechnungen unter Verwendung markanter Muster zum Einsatz kommen.

5. Verfahren nach Anspruch 4, **dadurch gekennzeichnet, daß** die markanten Muster für die optische Vermessung der geometrischen Anordnung der Mittel (2.1 bis 2.7) für die Projektion des Musters gegenüber den Mitteln (3.1 bis 3.5) für die Bildaufnahme durch Projektion gebildet werden.

6. Verfahren nach Anspruch 5, **dadurch gekennzeichnet, daß** im Strahlengang der Projektion des Musters für die Vermessung des Objekts (1.1) ein Strahlteiler (2.8) angeordnet ist, so daß das auf dem Musterträger (2.5) aufgebrachte Muster gleichermaßen zur Vermessung des Objekts verwendet wird und auf einer starr mit dem Grundgestell (3.3) verbundenen und in ihrer räumlichen Erstreckung bekannten Oberfläche (3.12) abgebildet wird.

7. Verfahren nach Anspruch 6, **dadurch gekennzeichnet, daß** durch optische Mittel (3.11) das auf die Oberfläche (3.12) projizierte Muster auf dem Bildwandler (3.5) abgebildet wird.

8. Verfahren nach Anspruch 7, **dadurch gekennzeichnet, daß** es sich bei der Oberfläche (3.12) um eine Mattscheibe handelt.

9. Verfahren nach Anspruch 7, **dadurch gekennzeichnet, daß** es sich bei den optischen Mitteln (3.11) um einen Spiegel handelt.

10. Verfahren nach Anspruch 7, **dadurch gekennzeichnet, daß**
a) es sich bei den optischen Mitteln (3.11) um einen Strahlteiler handelt, der den gesamten Strahlengang abdeckt,
b) mindestens zwei Einzelaufnahmen im Verlauf des Aufnahmevorgangs angefertigt werden und
c) zusätzlich schaltbare optische Mittel an zwei optischen Achsen des Strahlteilers angeordnet werden, die synchron zur Bildwechselfrequenz des Bildwandlers abwechselnd optisch durchlässig und undurchlässig geschaltet werden.

11. Verfahren nach Anspruch 1, **dadurch gekennzeichnet, daß**
a) mindestens zwei Einzelaufnahmen im Verlauf des Aufnahmevorgangs angefertigt werden,
b) die geometrische Anordnung der Mittel (2.1 bis 2.7) für die Projektion des Musters gegenüber den Mitteln (3.1 bis 3.5) für die Bildaufnahme für die Aufnahme eines Einzelbildes bekannt ist,
c) für wesentliche Bereiche des Objekts, für die bereits in dieser Bildaufnahme - die mit bekannter geometrischer Anordnung der Mittel (2.1 bis 2.7) für die Projektion des Musters gegenüber den Mitteln (3.1 bis 3.5) für die Bildaufnahme durchgeführt wurde -, eine ausreichende Anzahl von 3D-Koordinaten von Oberflächenbereichen gebildet werden konnte, für die auch in den nachfolgenden Einzelbildern entsprechende Bildinfomrationen vorliegen und
d) die geometrische Anordnung der Mittel (2.1 bis 2.7) für die Projektion des Musters gegenüber den Mitteln (3.1 bis 3.5) für die Bildaufnahme aus dem Vergleich der aus den Einzelbildern stammenden Daten bezüglih der Informationen hinsichtlich gleichermaßen abgebildeter Oberflächenbereiche des Objekts unter Verwendung numerischer Algorithmen berechnet wird.

12. Verfahren nach Anspruch 11, **dadurch gekennzeichnet, daß** die geometrische Anordnung der Mittel (2.1 bis 2.7) für die Projektion des Musters gegenüber den Mitteln (3.1 bis 3.5) für die Bildaufnahme für die Aufnahme eines Einzelbildes **dadurch** bekannt ist, daß die Positionierstifte (3.10) abgesteckt wurden.

13. Verfahren nach Anspruch 11 oder 12, **dadurch gekennzeichnet, daß** es sich bei den verwendeten numerischen Algorithmen, die die geometrische Anordnung der Mittel (2.1 bis 2.7) für die Projektion des Musters gegenüber den Mitteln (3.1 bis 3.5) für die Bildaufnahme berechnen, um Verfahren nach einer optimierenden Evolutionsstrategie handelt.

14. Verfahren nach einem der Ansprüche 11 bis 13, **dadurch gekennzeichnet, daß** das Bestimmen der zweiten Orientierung mindestens das Erzeugen eines abgeschätzten dreidimensionalen Bildes basierend auf dem zweiten Bild umfaßt.

15. Verfahren nach Anspruch 14, **dadurch gekennzeichnet, daß** das Erzeugen des mindestens einen abgeschätzten dreidimensionalen Bildes die Schritte umfasst:
Berechnen eines dreidimensionalen Bildes auf Basis des zweiten Bildes und einer abgeschätzten zweiten Orientierung,
Bestimmen einer am besten angepaßten Orientierung zwischen dem ersten dreidimensionalen Bild und dem abgeschätzten dreidimensionalen Bilds, und Bestimmen des Grades der Anpassung.

16. Verwendung der Verfahren nach einem der Ansprüche 1 bis 15 für die medizinische Diagnostik, Therapie oder Dokumentation.

17. Vorrichtung zur dreidimensionalen Vermessung von Objekten (1.1) mit mindestens einem elektronischen Bildwandler (3.5) mit flächigem Sichtfeld, mindestens einem optischen Mittel (3.4) für die Abbildung des Objekts auf den Bildwandler (3.5) und mindestens einer Strahlquelle (2.7) und geeigneten optischen Mitteln (2.4, 2.5 und 2.6) für die Projektion von Mustern, **dadurch gekennzeichnet, daß** die Mittel (2.1 bis 2.7) für die Projektion des Musters von den Mitteln (3.1 bis 3.5) für die Bildaufnahme räumlich getrennt, nicht fest mit ihnen verbunden und ihnen gegenüber in mindestens einem Freiheitsgrad beweglich sind.

18. Vorrichtung nach Anspruch 17, **dadurch gekennzeichnet, daß** die Mittel (2.1 bis 2.7) für die Projektion des Musters fest mit den Mitteln (3.1 bis 3.5) für die Bildaufnahme räumlich verbindbar sind, wobei in der verbundenen Position ihre relativen Lagen zueinander bekannt sind.

19. Vorrichtung nach Anspruch 17 oder 18, **dadurch gekennzeichnet, daß** mindestns ein Bildwandler (3.5) als CCD-Array ausgebildet ist.

20. Vorrichtung nach einem der Ansprüche 17 oder 19, **dadurch gekennzeichnet, daß** das Grundgestell (2.3, 3.3) oder der Träger (2.2, 3.2) mindestens zwei der Mittel (2.4 bis 2.7, bzw. 3.4, 3.5) starr verbindet.

21. Vorrichtung nach einem der Ansprüche 17 bis 20, **dadurch gekennzeichnet, daß** der Träger (2.2, 3.2) mit seinen Aufbauten mit dem Grundgestell (2.3, 3.3) lösbar verbunden und im übrigen derart ausgebildet ist, daß er sich für eine separate Sterilisation bzw. Desinfektion eignet.

22. Vorrichtung nach einem der Ansprüche 17 bis 21, **dadurch gekennzeichnet, daß** an dem Träger (3.2) mindestens ein Linsensystem zur optischen Abbildung des Objekts (1.1) auf dem Bildwandler (3.5) befestigt ist.

23. Vorrichtung nach einem der Ansprüche 17 bis 22, **dadurch gekennzeichnet, daß** an dem Träger (2.2) mindestens ein Linsensystem zur optischen Projektion des Musters auf das Objekt (1.1) befestigt ist.

24. Vorrichtung nach einem der Ansprüche 17 bis 23, **dadurch gekennzeichnet, daß** der Träger (2.2, 3.2) mindestens über eine optische Umlenkeinrichtung (2.1, 3.1) verfügt.

25. Verwendung der Vorrichtungen nach einem der Ansprüche 17 bis 24 für invasive medizinische Zwecke.

## Claims

1. Method for three-dimensional surveying of objects (1.1) by means of optical pick-ups, projected patterns, and triangulation calculations, using at least one electronic image converter (3.5) with an areal viewing field, at least one optical means (3.4) for imaging the object on the image converter (3.5) and at least one beam source (2.7) and suitable optical means (2.4, 2.5 and 2.6) for the projection of patterns, **characterised in that**
a) the means (2.1 to 2.7) for projection of the pattern are spatially separated from the means (3.1 to 3.5) for the image pick up, are not connected therewith and are moveable with respect thereto in at least one degree of freedom,
b) for at least one image pick up during the course of the pick up procedure, the geometrical arrangement of the means (2.1 to 2.7) for projection of the pattern with respect to the means (3.1 to 3.5) for image pick up is not known beforehand and has to be determined by using further means.

2. Method according to claim 1, **characterised in that** the further means which are used for determining the geometrical arrangement of the means (2.1 to 2.7) for projection of the pattern with respect to the means (3.1 to 3.5) for image pick up are means for surveying this geometrical arrangement.

3. Method according to claim 2, **characterised in that** surveying of the geometrical arrangement of the means (2.1 to 2.7) for projection of the pattern with respect to the means (3.1 to 3.5) for image pick up is done in an optical manner.

4. Method according to claim 3, **characterised in that** for optical surveying of the geometrical arrangement of the means (2.1 to 2.7) for projection of the pattern with respect to the means (3.1 to 3.5) for image pick up, triangulation calculations are employed, using prominent patterns.

5. Method according to claim 4, **characterised in that** the prominent patterns for optical surveying of the geometrical arrangement of the means (2.1 to 2.7) for projection of the pattern with respect to the means (3.1 to 3.5) for image pick up are formed by projection.

6. Method according to claim 5, **characterised in that** a beam splitter (2.8) is arranged in the beam path of projection of the pattern for surveying of the object (1.1), so that the pattern on the pattern carrier (2.5) is equally used for surveying the object, and is imaged on a surface (3.12) rigidly connected to the base frame (3.3) and having a known spatial extent.

7. Method according to claim 6, **characterised in that** the pattern projected onto the surface (3.12) is imaged on the image converter (3.5) by optical means (3.11).

8. Method according to claim 7, **characterised in that** the surface (3.12) is a matt screen.

9. Method according to claim 7, **characterised in that** the optical means (3.11) is a mirror.

10. Method according to claim 7, **characterised in that**
a) the optical means (3.11) is a beam splitter which covers the whole beam path,
b) at least two single images are prepared during the course of the pick up procedure, and
c) in addition, switchable optical means are arranged on two optical axes of the beam splitter, which are switched synchronously with respect to the image refresh rate of the image converter to be alternately optically transparent and opaque.

11. Method according to claim 1, **characterised in that**
a) at least two single image pick ups are made in the course of the pick up procedure,
b) the geometrical arrangement of the means (2.1 to 2.7) for projection of the pattern with respect to the means (3.1 to 3.5) for image pick up is known for picking up a single image.
c) for substantial areas of the object for which in this image pick up - which was carried out with a known geometrical arrangement of the means (2.1 to 2.7) for projection of the pattern with respect to the means (3.1 to 3.5) for image pick up - a sufficient number of 3D coordinates of surface areas could already be formed, for which there is also corresponding image data in the subsequent single images,
d) the geometrical arrangement of the means (2.1 to 2.7) for projection of the pattern with respect to the means (3.1 to 3.5) for image pick up is calculated using digital algorithms from comparison of the data originating from the single images with respect to the data taking into account surface areas of the object which are imaged to the same extent.

12. Method according to claim 11, **characterised in that** the geometrical arrangement of the means (2.1 to 2.7) for projection of the pattern with respect to the means (3.1 to 3.5) for image pick up is known for picking up a single image, **in that** the positioning pins (3.10) are marked out.

13. Method according to claim 11 or 12, **characterised in that** the digital algorithms used to calculate the geometrical arrangement of the means (2.1 to 2.7) for projection of the pattern with respect to the means (3.1 to 3.5) for image pick up are methods according to an optimising evolution strategy.

14. Method according to one of claims I 1 to 13, **characterised in that** determining the second orientation comprises at least generating an evaluated three-dimensional image based on the second image.

15. Method according to claim 14, **characterised in that** the generating of the, at least one, evaluated three-dimensional image comprises the steps:
calculating a three-dimensional image based on the second image and an evaluated second orientation,
determining a best suited orientation between the first three-dimensional image and the evaluated three-dimensional image,
and determining the degree of suitability.

16. Use of the methods according to one of claims 1 to 15 for medical diagnostics, therapy or documentation.

17. Device for three-dimensional surveying of objects (1.1) having at least one electronic image converter (3.5) with areal viewing field, at least one optical means (3.4) for imaging the object on the image converter (3.5) and at least one beam source (2.7) and suitable optical means (2.4, 2.5 and 2.6) for the projection of patterns, **characterised in that** the means (2.1 to 2.7) for projection of the pattern are spatially separated from the means (3.1 to 3.5) for the image pick up, are not connected rigidly therewith, and are moveable with respect thereto in at least one degree of freedom,

18. Device according to claim 17, **characterised in that** the means (2.1 to 2.7) for projection of the pattern can be connected spatially rigidly to the means (3.1 to 3.5) for image pick up, wherein their relative positions to one another are known in the connected position.

19. Device according to claim 17 or claim 18, **characterised in that** at least one image converter (3.5) is in the form of a CCD array.

20. Device according to one of claims 17 or 19, **characterised in that** the base frame (2.3, 3.3) or the carrier (2.2, 3.2) rigidly connects at least two of the means (2.4 to 2.7 or 3.4, 3.5).

21. Device according to one of claims 17 to 20, **characterised in that** the carrier (2.2, 3.2) and its components is releasably connected to the base frame (2.3, 3.3) and is furthermore of a configuration such that it is suitable for separate sterilisation or disinfection.

22. Device according to one of claims 17 to 21, **characterised in that** at least one lens system for optical imaging of the object (1.1) on the image converter (3.5) is fixed to the carrier (3.2).

23. Device according to one of claims 17 to 22, **characterised in that** at least one lens system for optical projection of the pattern onto the object (1.1) is fixed to the carrier (2.2).

24. Device according to one of claims 17 to 23, **characterised in that** the carrier (2.2, 3.2) is provided with at least one optical deflecting means (2.1, 3.1).

25. Use of the devices according to one of claims 17 to 24 for invasive medical purposes.

## Revendications

1. Procédé de mesure en trois dimensions d'objets (1.1) au moyen d'enregistrements optiques, de trames projetées et de calculs de triangulation, en utilisant au moins un convertisseur d'image électronique (3.5) à champ visuel plan, au moins un moyen optique (3.4) destiné à la représentation de l'objet sur le convertisseur d'image (3.5) et au moins une source de rayonnement (2.7) et des moyens optiques appropriés (2.4, 2.5 et 2.6) destinés à la projection de trames, **caractérisé en ce que**
a) les moyens (2.1 à 2.7) destinés à la projection de la trame sont séparés dans l'espace des moyens (3.1 à 3.5) destinés à l'enregistrement d'image, ne leur sont pas reliés et sont mobiles par rapport à eux avec au moins un degré de liberté, et
b) pour au moins un enregistrement d'image au cours du processus d'enregistrement, l'agencement géométrique des moyens (2.1 à 2.7) destinés à la projection de la trame par rapport aux moyens (3.1 à 3.5) destinés à l'enregistrement d'image n'est pas connu à l'avance et doit être déterminé en utilisant d'autres moyens.

2. Procédé selon la revendication 1, **caractérisé en ce que** les autres moyens, qui sont utilisés pour déterminer l'agencement géométrique des moyens (2.1 à 2.7) destinés à la projection de la trame par rapport aux moyens (3.1 à 3.5) destinés à l'enregistrement d'image, sont des moyens de mesure de cet agencement géométrique.

3. Procédé selon la revendication 2, **caractérisé en ce que** la mesure de l'agencement géométrique des moyens (2.1 à 2.7) destinés à la projection de la trame par rapport aux moyens (3.1 à 3.5) destinés à l'enregistrement d'image est effectuée sur un trajet optique.

4. Procédé selon la revendication 3, **caractérisé en ce que**, pour effectuer la mesure optique de l'agencement géométrique des moyens (2.1 à 2.7) destinés à la projection de la trame par rapport aux moyens (3.1 à 3.5) destinés à l'enregistrement d'image, on utilise des calculs de triangulation en utilisant des trames marquantes.

5. Procédé selon la revendication 4, **caractérisé en ce que** les trames marquantes destinées à la mesure optique de l'agencement géométrique des moyens (2.1 à 2.7) destinés à la projection de la trame par rapport aux moyens (3.1 à 3.5) destinés à l'enregistrement d'image sont formés par projection.

6. Procédé selon la revendication 5, **caractérisé en ce qu'**un répartiteur de faisceau (2.8) est placé dans le trajet de rayon de la projection de la trame destinée à la mesure de l'objet (1.1) de telle sorte que la trame placée sur le support de trame (2.5) est utilisée de la même manière pour mesurer l'objet, et est représentée sur une surface (3.12) reliée rigidement au bâti (3.3) et connue dans son extension spatiale.

7. Procédé selon la revendication 6, **caractérisé en ce que** la trame projetée sur la surface (3.12) est représentée sur le convertisseur d'image (3.5) par des moyens optiques (3.11).

8. Procédé selon la revendication 7, **caractérisé en ce que** la surface (3.12) est un disque mat.

9. Procédé selon la revendication 7, **caractérisé en ce que** les moyens optiques (3.11) sont constitués par un miroir.

10. Procédé selon la revendication 7, **caractérisé en ce que**
a) les moyens optiques (3.11) sont constitués par un répartiteur de faisceau qui couvre tout le trajet optique,
b) au moins deux enregistrements individuels sont effectués au cours du processus d'enregistrement et
c) en plus, des moyens optiques commutables sont placés sur deux axes optiques du diviseur de rayon et sont commutés de façon synchrone avec la fréquence alternative d'image du convertisseur d'image de manière à être altemativement transparents et opaques.

11. Procédé selon la revendication 1, **caractérisé en ce que**
a) au moins deux enregistrements individuels sont réalisés au cours du processus d'enregistrement,
b) l'agencement géométrique des moyens (2.1 à 2.7) destinés à la projection de la trame par rapport aux moyens (3.1 à 3.5) destinés à l'enregistrement d'image est connu pour l'enregistrement d'une image individuelle,
c) pour des zones importantes de l'objet, pour lesquelles un nombre suffisant de coordonnées en trois dimensions de zones de surface a déjà pu être formé dans cet enregistrement d'image qui a été réalisé avec un agencement géométrique connu des moyens (2.1 à 2.7) destinés à la projection de la trame par rapport aux moyens (3.1 à 3.5) destinés à l'enregistrement d'image, il existe également dans les images individuelles suivantes des informations d'image correspondantes et
d) l'agencement géométrique des moyens (2.1 à 2.7) destinés à la projection de la trame par rapport aux moyens (3.1 à 3.5) destinés à l'enregistrement d'image est calculé à partir de la comparaison des données provenant des images individuelles avec des informations relatives à des zones de surface de l'objet, représentées de la même manière, en utilisant des algorithmes numériques.

12. Procédé selon la revendication 11, **caractérisé en ce que** l'agencement géométrique des moyens (2.1 à 2.7) destinés à la projection de la trame par rapport aux moyens (3.1 à 3.5) destinés à l'enregistrement d'image est connu pour l'enregistrement d'une image individuelle en raison du fait que l'on a placé les goujons de positionnement (3.10).

13. Procédé selon la revendication 11 ou 12, **caractérisé en ce que** les algorithmes numériques utilisés, qui calculent l'agencement géométrique des moyens (2.1 à 2.7) destinés à la projection de la trame par rapport aux moyens (3.1 à 3.5) destinés à l'enregistrement d'image, sont constitués par un procédé fonctionnant suivant une stratégie d'évolution d'optimisation.

14. Procédé selon l'une des revendications 11 à 13, **caractérisé en ce que** la détermination de la deuxième orientation comporte au moins la génération d'une image tridimensionnelle évaluée en se fondant sur la deuxième image.

15. Procédé selon la revendication 14, **caractérisé en ce que** la génération d'au moins une image tridimensionnelle évaluée comporte les étapes consistant à :
calculer une image tridimensionnelle en se fondant sur la deuxième image et sur une deuxième orientation évaluée,
déterminer une orientation la mieux adaptée entre la première image tridimensionnelle et l'image tridimensionnelle évaluée, et
déterminer le degré d'adaptation.

16. Utilisation du procédé selon l'une des revendications 1 à 15 pour le diagnostic, la thérapie ou la documentation médicale.

17. Dispositif de mesure en trois dimensions d'objets (1.1) avec au moins un convertisseur d'image électronique (3.5) à champ visuel plan, au moins un moyen optique (3.4) destiné à la représentation de l'objet sur le convertisseur d'image (3.5) et au moins une source de rayonnement (2.7) et des moyens optiques appropriés (2.4, 2.5 et 2.6) destinés à la projection de trames, **caractérisé en ce que** les moyens (2.1 à 2.7) destinés à la projection de la trame sont séparés spatialement des moyens (3.1 à 3.5) destinés à l'enregistrement d'image, ne leur sont pas reliés de façon fixe et sont mobiles par rapport à eux avec au moins un degré de liberté.

18. Dispositif selon la revendication 17, **caractérisé en ce que** les moyens (2.1 à 2.7) destinés à la projection de la trame peuvent être reliés de façon fixe dans l'espace aux moyens (3.1 à 3.5) destinés à l'enregistrement d'image, leurs positions relatives à l'état relié étant connues.

19. Dispositif selon la revendication 17 ou 18, **caractérisé en ce qu'**au moins un convertisseur d'image (3.5) est constitué par un réseau CCD.

20. Dispositif selon l'une des revendications 17 ou 19, **caractérisé en ce que** le bâti (2.3, 3.3) ou le support (2.2, 3.2) relie rigidement au moins deux des moyens (2.4 à 2.7, resp. 3.4, 3.5).

21. Dispositif selon l'une des revendications 17 à 20, **caractérisé en ce que** le support (2.2, 3.2) est relié de façon amovible, pas sa structure, au bâti (2.3, 3.3) et est conformé par ailleurs de telle sorte qu'il est approprié pour une stérilisation ou désinfection séparée.

22. Dispositif selon l'une des revendications 17 à 21, **caractérisé en ce que** au moins un système de lentilles destiné à la représentation optique de l'objet (1.1) sur le convertisseur d'image (3.5) est fixé au support (3.2).

23. Dispositif selon l'une des revendications 17 à 22, **caractérisé en ce que** au moins un système de lentilles destiné à la projection optique de la trame sur l'objet (1.1) est fixé au support (2.2).

24. Dispositif selon l'une des revendications 17 à 23, **caractérisé en ce que** le support (2.2, 3.2) dispose d'au moins un dispositif de déviation optique (2.1, 3.1).

25. Utilisation des dispositifs selon l'une des revendications 17 à 24 en médecine traumatisante.
